# EUROPEAN PATENT APPLICATION

(11) **EP 4 770 108 A1**
(43) Date of publication of application: **01.07.2026**
(21) Application number: 24943198.2
(22) Date of filing: 08.11.2024
(51) Int. Cl.: H04N 23/53

(54) **INFRARED CAMERA**

(30) Priority: 14.06.2024 CN 202410769471; 14.06.2024 CN 202421360754 U; 14.06.2024 CN 202421360745 U; 14.06.2024 CN 202421360736 U; 14.06.2024 CN 202421360746 U
(71) Applicant: Raytron Technology Co., Ltd., Yantai, Shandong 264006 (CN)
(72) Inventor: ZHANG, Zhonggang, Yantai, Shandong 264006 (CN); JING, Sai, Yantai, Shandong 264006 (CN); LIU, Jigang, Yantai, Shandong 264006 (CN)
(74) Representative: Studio Torta S.p.A.
(86) International application number: PCT/CN2024/130854
(87) International publication number: WO 2025/256044

(57) **Abstract**

An infrared camera, comprising a handle, an infrared imaging module and a display, wherein the handle is configured for a user to hold; the infrared imaging module is arranged on the handle and is configured for infrared image acquisition; the display is movably arranged on the handle, and the display is electrically connected to the infrared imaging module, and is configured to receive an infrared image collected by the infrared imaging module and display same; the display can be moved between an unfolded state and a folded state; when in the folded state, a screen of the display fits to the handle; and when in the unfolded state, the screen of the display is separated from the handle and can be rotated until the screen faces the user for easy viewing. By applying the infrared camera, the user can adjust the display to an appropriate distance and angle according to viewing habits, thereby not easily causing eye fatigue even after using same for a long time. Moreover, when there is no need to view the image, the display can be moved to the folded state to protect the screen, and the camera is also easy to carry.

## Description

The present application claims the priorities to the following Chinese patent applications, all of which are incorporated herein by reference:
1) Chinese Patent Application No. 202410769471.2, titled "INFRARED CAMERA", filed with the China National Intellectual Property Administration on June 14, 2024;
2) Chinese Patent Application No. 202421360754.3, titled "INFRARED CAMERA", filed with the China National Intellectual Property Administration on June 14, 2024;
3) Chinese Patent Application No. 202421360745.4, titled "CAMERA", filed with the China National Intellectual Property Administration on June 14, 2024;
4) Chinese Patent Application No. 202421360736.5, titled "CAMERA", filed with the China National Intellectual Property Administration on June 14, 2024; and
5) Chinese Patent Application No. 202421360746.9, titled "CAMERA", filed with the China National Intellectual Property Administration on June 14, 2024.

### FIELD

The present application relates to the technical field of camera equipment, and in particular to an infrared camera.

### BACKGROUND

An infrared camera can capture an infrared spectral image that is invisible to human eyes. It is widely used and makes people's work and life more convenient.

A conventional infrared camera is cylindrical, which has a lens hole at a front end of the housing. An infrared core is provided in the housing, and an infrared lens is provided in the infrared lens hole. An eyepiece is provided at a rear end of the housing, and has a built-in screen for observation by a user. In another type of conventional infrared camera, the eyepiece and the infrared lens are both arranged at the top of the housing with opposite orientations. The lower part of the housing is provided with a handle for the user to grip. During use, the user can hold the infrared camera by hand and observe the image through the eyepiece. However, the image displayed in the eyepiece is small and requires the eye to be close to the eyepiece. Prolonged observation of the image through the eyepiece can easily cause eye fatigue, which in turn affects the user experience. Moreover, in order to satisfy the mounting requirements of the built-in screen and its positional relationship with the infrared lens, the camera has a large overall size, making it inconvenient to carry. In addition, it cannot meet the user's various shooting needs due to the inherent inflexible operating manner.

### SUMMARY

In view of this, an object of the present application is to provide an infrared camera. The structural design of the infrared camera can effectively address the issue of eye fatigue due to prolonged observation of the image through the eyepiece.

In order to achieve the object above, the following technical solutions are provided in the present application.

An infrared camera includes a handle, an infrared imaging module, and a display.

The handle is configured for a user to grip.

The infrared imaging module is arranged on the handle and is configured to capture an infrared image.

The display is movably arranged on the handle and is electrically connected to the infrared imaging module. The display is configured to receive and display the infrared image captured by the infrared imaging module. The display is movable between an unfolded state and a folded state. In the folded state, a screen of the display is flush against the handle. In the unfolded state, the screen of the display is disengaged from the handle and is configured to rotate to face the user for observation.

The infrared camera provided in the present application includes a handle, an infrared imaging module, and a display. The handle is for a user to grip. The infrared imaging module is arranged on the handle and is configured for infrared image capture. The display is movably arranged on the handle and is electrically connected to the infrared imaging module. The display is configured for receiving and displaying the infrared image captured by the infrared imaging module. The display is configured to move to an unfolded state and to a folded state. In the folded state, a screen of the display is flush against the handle. In the unfolded state, the screen of the display is disengaged from the handle and is configured to rotate to face the user for observation.

When using the infrared camera provided in the present application, since the display is externally arranged on the handle and is electrically connected to the infrared imaging module, the image captured by the infrared imaging module can be displayed on the display. During use, the user can hold the handle. When the infrared imaging module is in operation for shooting, the captured image can be displayed on the display for easy observation by the user. Due to the fact that the display is externally arranged on the handle, the user can choose a suitable position and angle relative to the display according to the observation habits, so that it can hardly cause eye fatigue even during prolonged use. In addition, when observation of image is not needed, the display may be moved into the folded state to protect the screen. This also reduces the overall size of the infrared camera for easy carrying. Moreover, the display is movably connected to the handle, and thus the user can adjust the position of the display according to different shooting needs, thereby offering greater operational flexibility.

### BRIEF DESCRIPTION OF THE DRAWINGS

For more clearly illustrating embodiments of the present application or the technical solutions in the related art, the accompany drawings for description of the embodiments or the related art will be briefly described hereinafter. Apparently, the drawings in the following description are only some examples of the present application, and for those skilled in the art, other drawings may be obtained based on these drawings without any creative efforts.
FIG. 1 is a schematic structural view of an infrared camera according to an embodiment of the present application;
FIG. 2 is a schematic view of a display of the infrared camera in an unfold state;
FIG. 3 is a schematic view of an interior of a connection between the display and a handle;
FIG. 4 is a schematic view of the infrared camera from another perspective;
FIG. 5 is a schematic view of the infrared camera from yet another perspective;
FIG. 6 is a schematic structural view of an infrared imaging module;
FIG. 7 is a schematic exploded view of the infrared imaging module;
FIG. 8 is a schematic structural view of an infrared core;
FIG. 9 is a schematic view showing the arrangement of a mounting seat and a laser indicator;
FIG. 10 is a schematic structural view of a base;
FIG. 11 is a schematic view of the base from another perspective;
FIG. 12 is a schematic exploded structural view of the base;
FIG. 13 is a side view of the infrared camera;
FIG. 14 is a schematic view of the infrared camera with the imaging module being disassembled;
FIG. 15 is a schematic structural view of a first mounting member;
FIG. 16 is a schematic view of the first mounting member from another perspective;
FIG. 17 is a schematic structural view of a second mounting member;
FIG. 18 is a schematic view of the second mounting member from another perspective;
FIG. 19 is a schematic structural view of a first connecting disc;
FIG. 20 is a schematic view showing the cooperation of the first mounting member, the second mounting member, and a cover plate;
FIG. 21 is a schematic view of FIG. 20 from another perspective;
FIG. 22 is a schematic cross-sectional view showing the cooperation of the first mounting member, the second mounting member, and the cover plate; and
FIG. 23 is a schematic structural view of the cover plate.

References numerals are listed below:
1-infrared imaging module, 2-handle, 3-display, 4-standard threaded hole, 5-laser indicator, 6-lighting lamp, 7-mounting seat, 8-main switch, 9-battery compartment, 51-indicator switch, 61-lighting switch, 91-charging port;
11-mounting assembly, 12-imaging core, 13-first electrical connector;
111-first mounting member, 112-second mounting member, 113-first connecting disc, 114-cover plate, 115-engagement block, 117-limiting groove, 118-limiting protrusion, 119-cover plate mounting groove, 1131-contact hole;
121-infrared core, 122-infrared lens, 123-focusing ring, 124-connecting port;
21-mounting portion, 22-gripping portion, 23-housing, 24-base, 25-second electrical connector, 27-engagement groove, 28-mounting positioning portion, 29-mounting hole, 241-base body, 242-second connecting disc, 243-base fixing hole, 244-mounting fixing hole, 245-base positioning hole, 246-base threaded hole;
31-screen pivot;
71-mounting seat body, 72-mounting seat protrusion, 73-fixing portion, 74-positioning structure, 75-cap.

### DETAILED DESCRIPTION OF THE EMBODIMENTS

An infrared camera is disclosed in an embodiment of the present application, which is easy to carry and enables convenient and comfortable viewing.

The technical solutions in the embodiments of the present application will be clearly and completely described in conjunction with the accompanying drawings below. Obviously, the described embodiments are only a part of the embodiments of the present application, not all of them. Based on the embodiments of the present application, all other embodiments obtained by those skilled in the art without creative labor shall fall within the protection scope of the present application.

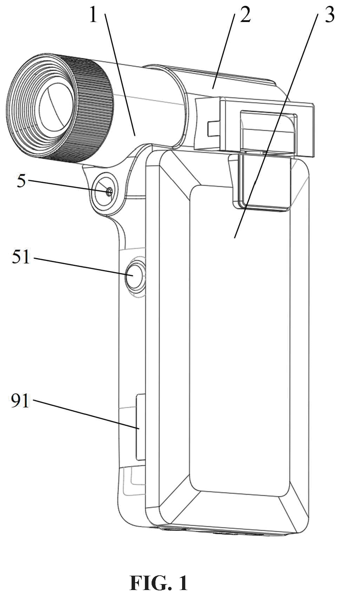

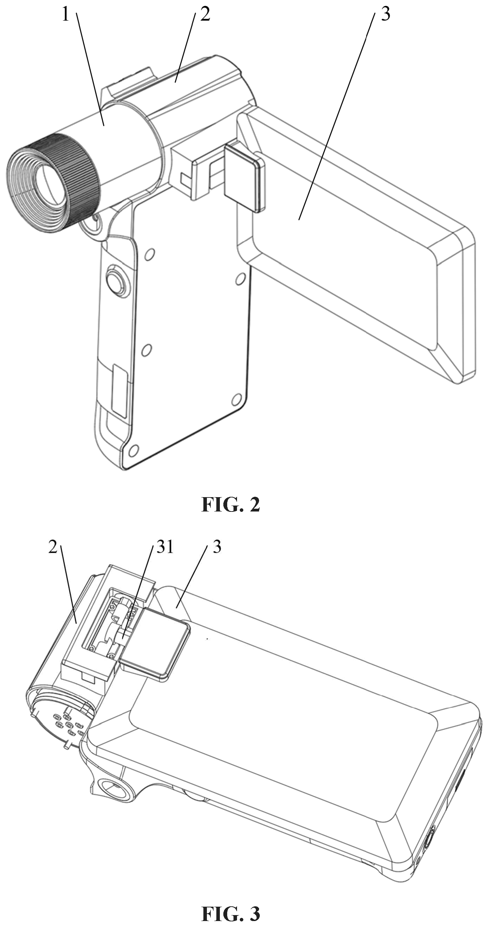

In some embodiments, referring to FIG. 1 to FIG. 5, an infrared camera provided in the present application includes an infrared imaging module 1, a handle 2, and a display 3. The handle 2 is configured for a user to grip and use the camera. That is, the infrared camera is a handheld device that the user can easily hold and use. The shape of the handle 2 may be designed according to the user's gripping requirements. The infrared imaging module 1 is arranged on the handle 2 and is configured to capture an infrared image. The display 3 is movably arranged on the handle 2 and is electrically connected to the infrared imaging module 1. The display 3 is configured to receive and display the infrared image captured by the infrared imaging module 1. The display 3 is arranged on the handle 2, that is, the infrared camera has an external display 3 for displaying the infrared image. The display 3 is movable between an unfolded state and a folded state. As shown in FIG. 1, in the folded state, a screen of the display 3 is flush against the handle 2, so that the infrared camera is easy to carry, and the screen of display 3 can be protected. It can be understood that the screen is flush against to handle 2, which not only includes the case that a screen body that can display the infrared image, such as an LED (light-emitting diode) screen body, is flush against the handle 2, but also includes the case that a screen housing surrounding the screen body is flush against the handle 2. As shown in FIG. 2, in the unfolded state, the screen of the display 3 is disengaged from the handle 2 and can be rotated to face the user for easy observation. Specifically, the screen may be rotated to have the same or opposite orientation relative to an infrared lens of the infrared imaging module 1, so that the user can easily observe the captured images through the display 3 when capturing front images or selfies.

When using the infrared camera provided in the present application, since the display 3 is externally arranged on the handle 2 and is electrically connected to the infrared imaging module 1, the image captured by the infrared imaging module 1 can be displayed on the display 3. During use, the user can hold the handle 2. When the infrared imaging module 1 is in operation for shooting, the captured image can be displayed on the display 3 for easy observation by the user. Due to the fact that the display 3 is externally arranged on the handle 2, the user can choose a suitable position and angle relative to the display 3 according to the observation habits, so that it can hardly cause eye fatigue even during prolonged use. In addition, when observation of image is not needed, the display 3 may be moved into the folded state to protect the screen. This also reduces the overall size of the infrared camera for easy carrying. Moreover, the display 3 is movably connected to the handle 2, and thus the user can adjust the position of the display 3 according to different shooting needs, thereby offering grater operational flexibility.

In some embodiments, the display 3 is connected to a side of the mounting portion 21 and can rotate relative to the handle 2 about a first direction and a second direction. When the display 3 is rotated relative to the handle 2 about the first direction to be in the unfolded state, the display 3 can be further rotated about the second direction to make the screen face the user. In this embodiment, the display 3 can rotate separately about the first direction and the second direction, which expands the range of motion of the display 3 to accommodate various observation needs in a broader range. Moreover, in the folded state, the display 3 and the handle 2 as a whole occupy a smaller volume, making it easy to carry and store.

Specifically, the first direction is perpendicular to the second direction, which facilitates the arrangement of the rotational connecting structure and the adjustment of the state of the display 3. Further, the first direction is parallel to an optical axis of the infrared imaging module 1, and the second direction is perpendicular to the optical axis of the infrared imaging module 1.

In some embodiments, the display 3 is connected to the handle 2 through a screen pivot 31. The screen pivot 31 may be configured as a universal component, which may include a revolute pair. One end of the screen pivot 31 is fixedly connected to the handle 2 by a conventional connecting means, such as by bolts. The other end of the screen pivot 31 is connected to the display screen, so that the display 3 can be folded and unfolded through the screen pivot 31 and can rotate about an axial direction of the screen pivot 31.

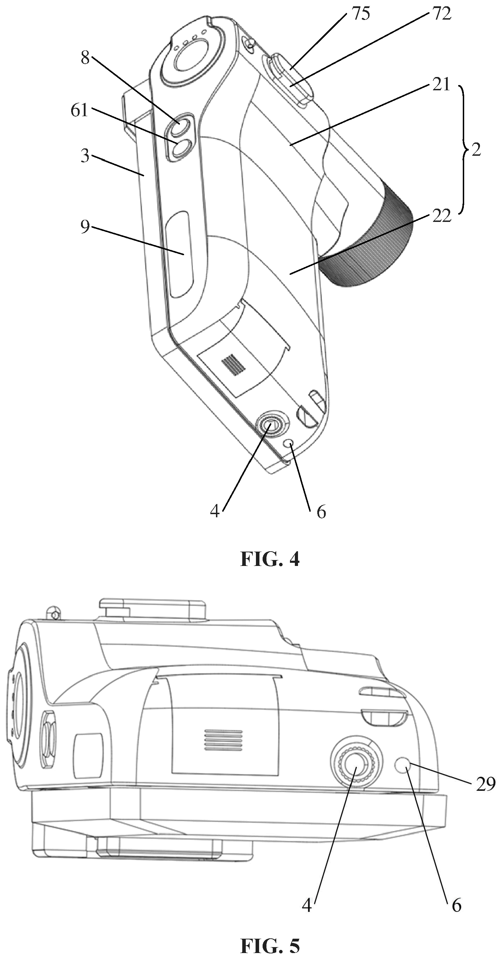

In some embodiments, referring to FIG. 4, the handle 2 includes a mounting portion 21 and a gripping portion 22. The mounting portion 21 is arranged at a top end of the gripping portion 22. The infrared imaging module 1 is arranged at a front end of the mounting portion 21. The display 3 is arranged on a side of the mounting portion 21. The gripping portion 22 is for the user to grip. It can be understood that the mounting member 21 and the gripping portion 22 may have an integral structure, or may have separate structures connected to each other by conventional connecting means. The mounting portion 21 is configured for mounting of the infrared imaging module 1. The specific structure of the mounting portion 21 may be determined according to the structure of the infrared imaging module 1 and the connecting means between the mounting portion 21 and the imaging module 1, which is not specifically limited here. The mounting portion 21 is arranged at the top end of the gripping portion 22. The infrared imaging module 1 is arranged at the front end of the mounting portion 21, that is, the infrared imaging module 1 is arranged at a front end of a top portion of the infrared camera. The display 3 is arranged on a side of the mounting portion 21. In the case that the display 3 is connected to the handle 2 through the screen pivot 31, the screen pivot 31 may be arranged on a left or right side of the mounting portion 21. Specifically, an end of the display 3 is connected to the screen pivot 31. The gripping portion 22 is configured for the user to grip. Specifically, a side wall of the gripping portion 22 is configured for the user to grip. Therefore, when the user holds the gripping portion 22 vertically, the infrared imaging module 1 can shoot in a forward or backward direction, facilitating convenient operation. It can be understood that the forward direction mentioned here and in the following text includes both the straight forward and oblique forward directions, such as a forward-upward direction. The backward direction mentioned here and in the following text includes both the straight backward and oblique backward directions.

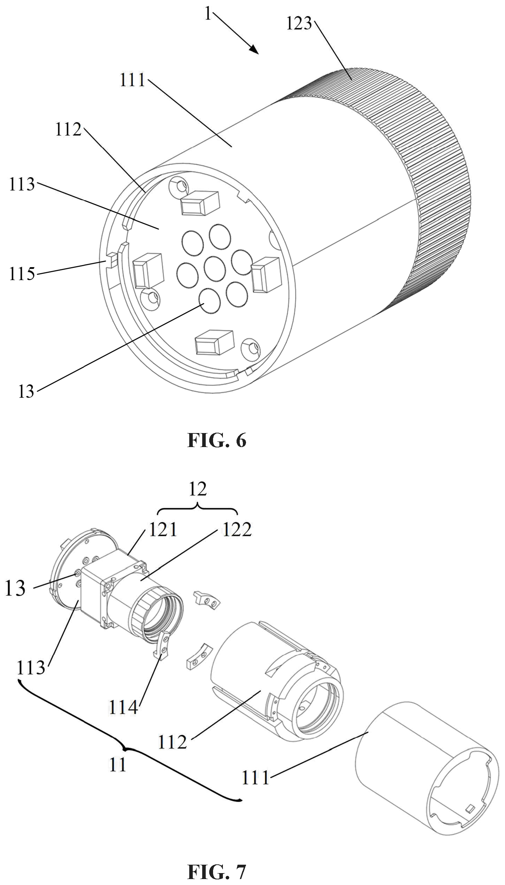

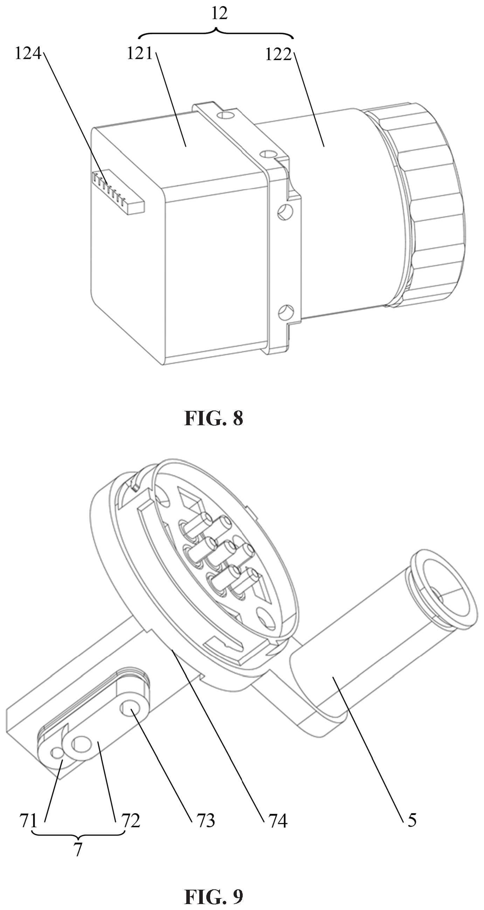

In some embodiments, referring to FIG. 6 and FIG. 7, the infrared imaging module 1 includes an imaging core 12 and a mounting assembly 11. The imaging core 12 is configured for image detection. The mounting assembly 11 is configured to mount the imaging core 12 and mount the infrared imaging module 1 to the handle 2. With the mounting assembly 11, the imaging core 12 can be easily mounted to the handle 2 without the need for a connecting structure on the imaging core 12 to cooperate with the handle 2. Moreover, the mounting assembly 11 is provided for connecting, making it convenient to connect imaging cores 12 of different specifications to the handle 2 with an unchanging specification. Referring to FIG. 8, the imaging core 12 specifically includes an infrared lens 122 and an infrared core 121. The infrared core 121 is used to process the light captured by the infrared lens 122 to generate infrared image data and transmit it to the display 3 for displaying the image. The specific principle of infrared image generation may refer to conventional infrared cores, which will not be repeated here.

In some embodiments, the infrared imaging module 1 further includes a focusing ring 123. The infrared lens 122 is clamped by an inner wall face of the focusing ring 123. Rotation of the focusing ring 123 drives the infrared lens 122 to rotate, so as to adjust a focal length of the infrared lens 122.

In some embodiments, referring to FIG. 4 and FIG. 5, a bottom surface of the handle 2 is provided with a standard threaded hole 4. Specifically, the standard threaded hole 4 is provided on a bottom surface of the gripping portion 22. The standard threaded hole 4 may be specifically a 1/4 threaded hole. The threaded hole of a standard size facilitates assembly with a tripod, so that the entire infrared camera device can be fixed to the tripod. Alternatively, the standard threaded hole 4 may be connected to other accessories, for example, a handheld rod.

In some embodiments, a main switch 8 is provided on a side wall of the handle 2 that faces opposite to the infrared lens 122 of the infrared imaging module 1. The main switch 8 may be specifically provided on a rear side wall of the gripping portion 22. The main switch 8 is used to control the on/off of the infrared camera. With the main switch 8, it is easy to switch on and off the infrared camera. Moreover, the main switch 8 is arranged on the side wall of the handle 2 and is oriented opposite to the infrared lens 122, and thus the user can easily operate the main switch 8 with the thumb while holding the infrared camera.

In some embodiments, a battery compartment 9 is provided in the handle 2. Specifically, the battery compartment 9 may be provided in the gripping portion 22. The battery compartment 9 is used for installing a battery. The battery is electrically connected to the display 3 and the infrared imaging module 1. The battery supplies power to the display 3 and the infrared imaging module 1. The battery is specifically configured as a rechargeable battery for repeated use. In a case that the infrared camera is provided with a lighting lamp 6 and a laser indicator 5, the battery can further supply power to the lighting lamp 6 and the laser indicator 5. In a case that the infrared camera is provided with the main switch 8, the main switch 8 is connected to the battery to switch on/off the power.

Further, a charging port 91 of the battery compartment 9 is preferably located on a side wall of the handle 2 that faces in the same direction as the infrared lens 122 of the infrared imaging module 1. The battery can be charged through the charging port 91. With the above arrangement of the charging port 91, when the infrared lens 122 of the infrared camera is placed on a desktop facing upward or to one side, the charging port 91 can be well exposed for easy charging.

In some embodiments, referring to FIG. 4 and FIG. 9, the handle 2 is provided with a mounting seat 7, which is used for detachably connecting an external accessory. Specifically, the mounting seat 7 may be located on a side wall of the mounting portion 21 of the handle 2. It can be understood that the mounting seat 7 and the handle 2 may either be integrally formed or be separately formed and connected by a conventional connecting means. With the mounting seat 7 provided on the handle 2, external accessories can be connected to the camera. With the arrangement above, the infrared camera can be equipped with other accessories as needed to meet the corresponding shooting needs, which further improves the user experience. For example, accessories such as a laser distance measuring device, an infrared indicator, a fill light, etc. can be connected to the camera through the mounting seat 7, so as to perform laser ranging, infrared indicating, fill lighting, etc. while capturing the image.

In some embodiments, the mounting seat 7 and the infrared imaging module 1 are both arranged at the top end of the handle 2. By arranging the mounting seat 7 at the top end of the handle 2, that is, arranging the mounting seat 7 close to the infrared imaging module 1, the mounting seat 7 can easily cooperate with the infrared imaging module 1. Moreover, since the user usually holds the middle and lower portions of the handle 2, arranging the mounting seat 7 at the top end of the handle 2 can provide more installation space for the external accessory.

In some embodiments, the mounting seat 7 is arranged on a side wall of the top end of the handle 2. A front portion of the top end of handle 2 is used for mounting the infrared imaging module 1 for easy shooting. Therefore, the arrangement of the mounting seat 7 on the side wall of the top end of the handle 2 makes better use of the space on a lateral side of the handle 2 and prevents interference between the external accessories and the infrared imaging module 1, thereby making the overall structure more compact.

In some embodiments, the mounting seat 7 includes a mounting seat body 71 and a mounting seat protrusion 72 provided on the mounting seat body 71. The mounting seat protrusion 72 is provided with a fixing portion 73 for connecting the external accessory. An opening is formed on the side wall of the handle 2, and the mounting seat protrusion 72 is arranged at the opening. The mounting seat 7 and the handle 2 are formed separately. The mounting seat body 71 is arranged inside the handle 2, and the mounting seat protrusion 72 is arranged at the opening. That is, the mounting seat protrusion 72 can be exposed through the opening, which not only includes the case that the mounting seat protrusion 72 extends through the opening with an outer end of the mounting seat protrusion 72 being flush with the opening or protruding from the opening or being located in the opening, but also includes the case that the mounting seat protrusion 72 is arranged facing the opening without extending into the opening. With the arrangement above, on the one hand, the fixing portion 73 can be exposed for connection with an external accessory; and on the other hand, the mounting seat 7 has little impact on the appearance of the handle 2, which can keep the appearance of the handle 2 neat. Moreover, the neat and smooth appearance of the handle 2 reduces the likelihood of wear, e.g. scratches, and avoids bumps during use, which further improves the user experience.

In some embodiments, the external accessory is connected to the mounting seat 7 through a standard mounting component. The mounting seat 7 is detachably connected with the standard mounting component, and the standard mounting component can be connected with various external accessories. In a case that the fixing portion 73 is provided as described above, the external accessory is connected to the fixing portion 73 through the standard mounting component. When the external accessory needs to be installed, the standard mounting component is first connected to the mounting seat 7, and thus various external accessories can be assembled through the standard mounting component. When the external accessory is not needed, the standard mounting component can be removed from the mounting seat 7. With the arrangement above, on the one hand, the appearance of the infrared camera is neat; and on the other hand, various external accessories can be connected through the standard mounting component. Specifically, the standard mounting component may be configured as a standard connector, such as a Picatinny rail. Specifically, the standard mounting component may be connected to the mounting seat 7 through a bolt, that is, the fixing portion 73 may include a threaded hole provided on the mounting seat 7 to connect with the standard mounting component through a bolt. Alternatively, the standard mounting component may be detachably connected to the mounting seat 7 by other conventional means, such as engagement.

In some embodiments, referring to FIG. 9 to FIG. 12, the handle 2 is provided with a mounting positioning portion 28. The mounting seat 7 is provided with a positioning structure 74 configured to cooperate with the mounting positioning portion 28, so that an axial direction of the external accessory connected to the mounting seat 7 is parallel to the optical axis of the infrared imaging module 1. The mounting base 7 and the handle 2 are separately formed, and the positioning and precise assembly between the mounting base 7 and the handle 2 can be achieved through cooperation of the mounting positioning portion 28 and the positioning structure 74, which ensures that the axial direction of the external accessory connected to the mounting base 7 is parallel to the optical axis of the infrared imaging module 1, thereby meeting the axial mounting requirements of the external accessory. In a case that the mounting positioning portion 28 and the handle 2 are integrally formed, the parallelism between the axial direction of the external accessory connected to the mounting seat 7 and the optical axis of the infrared imaging module 1 can be ensured through precision control during machining.

In some embodiments, the mounting positioning portion 28 includes a guide groove. A bottom surface of the guide groove is perpendicular to the axial direction of the infrared imaging module 1. The guide groove is provided on the handle 2, and the mounting seat 7 is mounted in the guide groove. The bottom surface of the guide groove is perpendicular to the axial direction of the infrared imaging module 1. In this way, the mounting seat 7 is positioned by the bottom surface of the guide groove, leading to a high positional precision of the mounting seat 7 relative to the infrared imaging module 1, thereby ensuring the coaxiality of the external accessory and the infrared imaging module 1. Specifically, the shape of the guide groove is designed to accommodate an end portion of the mounting seat 7, that is, a side wall of the guide groove is in contact with a side wall of the mounting seat 7. As such, the guide groove not only axially positions the mounting seat 7, but also circumferentially limits the mounting seat 7, which facilitates mounting of the mounting seat 7. In other embodiments, the mounting positioning portion 28 may be a positioning protrusion or other structure that cooperates with the mounting seat 7.

Further, the positioning structure 74 includes an end face of the mounting seat 7 in contact with the bottom surface of the guide groove. The bottom surface of the guide groove is ensured to be perpendicular to the optical axis of the infrared imaging module 1, and the flatness of both the bottom surface of the guide groove and the end surface of the mounting seat 7 are ensured, so that the mounting seat 7 is ensured to be parallel to the optical axis of the infrared imaging module 1. Therefore, when various external accessories are assembled on the mounting seat 7, the optical axis of the respective external accessory is parallel to the optical axis of the infrared imaging module 1. The end face of the mounting seat 7 serves as the positioning structure 74. On the one hand, the positioning is achieved through surface contact, which has a larger contact area than multi-point contact and line contact, and thus has high positioning precision and reliability. On the other hand, there is no need for an additional positioning structure 74 on the mounting base 7, and the end face of the mounting base 7 directly serves as the positioning structure 74, which simplifies the structure. The bottom surface of the guide groove may be provided with a mounting fixing hole 244 to connect with mounting seat 7 through a bolt.

Specifically, the handle 2 is provided with a base 24. Specifically, the base 24 may be provided in the mounting portion 21. The infrared imaging module 1 is mounted on one end face of the base 24. The guide groove is provided on the other end face of the base 24 and extends in a radial direction of the infrared imaging module 1. One end of the mounting seat 7 is arranged in the guide groove, and the end face of the mounting seat 7 is in contact with the bottom surface of the guide groove for positioning. Two opposite side walls of the mounting seat 7 are in contact with two opposite side walls of the guide groove respectively, so as to circumferentially position the mounting seat 7.

In some embodiments, the handle 2 is provided with an integrated base body 241. The infrared imaging module 1 and the mounting base 7 are both arranged on the base body 241. The infrared imaging module 1 and the mounting base 7 are mounted on the same structural component. The processing precision of the same structural component can be easily controlled, which in turn improves the positioning precision of the infrared imaging module 1 and the mounting base 7. This avoids the coaxiality deviation of the optical axes caused by installation, adjustment, etc. and the resulted adverse effects, and improves the imaging effect or the user experience of the product.

In some embodiments, a cap 75 is further provided, which is detachably connected to the mounting seat 7. With the cap 75, when no external accessory is connected, the cap 75 can be mounted to the mounting seat 7 for dust prevention, protection, and aesthetics. Specifically, the cap 75 may be connected to the mounting seat 7 through engagement, thereby facilitating disassembly and assembly. In a case that the mounting seat 7 includes the mounting seat protrusion 72, and the mounting seat protrusion 72 protrudes out of the opening on the handle 2, the cap 75 is specifically used to cover the mounting seat protrusion 72.

In some embodiments, referring to FIG. 1 and FIG. 9, the infrared camera further includes a laser indicator 5, which is arranged on the handle 2. A laser emission direction of the laser indicator 5 is consistent with an orientation of the infrared lens of the infrared imaging module 1, and an optical axis of the laser indicator 5 is parallel to the optical axis of the infrared imaging module 1. The laser indicator 5 is a device that can emit laser to project a light spot or a beam of light towards an object. The laser indicator 5 can visually indicate the position to be captured by the infrared imaging module 1. That is, under the indication effect of the laser indicator 5, the user can quickly and accurately target the shooting object, thereby improving the accuracy and reliability of the infrared camera during shooting.

In a case that the handle 2 includes a base 24, the infrared imaging module 1 and the laser indicator 5 are both arranged on the base 24. For example, the infrared imaging module 1 and the laser indicator 5 are both arranged on the integrated base body 241. The infrared imaging module 1 and the laser indicator 5 are mounted on the same structural component. As such, it is easy to control the precision of a single structural component during manufacturing, which improves the positioning precision of the infrared imaging module 1 and the laser indicator 5. This avoids the optical axis coaxiality deviation caused by installation, adjustment, etc. and thus avoids the resulted adverse effects, and improves the imaging effect or the user experience of the product.

Specifically, the base 24 is provided with a first mounting part and a second mounting part. The first mounting part is used to mount the infrared imaging module 1, and the second mounting part is used to mount the laser indicator 5. Specifically, the first mounting part and the second mounting part are arranged on one end face of the base 24. In the case that the infrared camera is provided with the mounting seat 7, the mounting seat 7 may be arranged on the opposite end face of the base 24. The second mounting part is specifically provided with a base positioning hole 245 to cooperate with a positioning protrusion of the laser indicator 5 for positioning. The number of the base mounting position 245 may be determined as needed. For example, multiple base mounting positions 245 may be provided. The second mounting part is specifically provided with a base threaded hole 246 to connect with the laser indicator 5 through a bolt. The second mounting part is ensured to be parallel to the bottom surface of the laser indicator 5 and is perpendicular to the optical axis of the base. An optical axis of the laser emitted by the laser indicator 5 is perpendicular to the bottom surface of the laser indicator 5, which ensures that the optical axis of the laser is parallel to the optical axis of the infrared imaging module 1. In addition, a base fixing hole 243 may be provided on the base to connect to a housing of the handle 2 through a bolt. The number of the base fixed hole 243 may be determined as needed. For example, multiple base fixed holes 243 may be provided.

In some embodiments, a mounting plane of the first mounting part is parallel to or coplanar with a mounting plane of the second mounting part, and is perpendicular to the optical axes of the infrared imaging module 1 and the laser indicator 5. With the arrangement above, the optical axis of the infrared imaging module 1 is ensured to be parallel to the optical axis of the laser indicator 5. Specifically, the mounting plane of the second mounting part is ensured to be parallel to the bottom surface of the laser indicator 5 and is perpendicular to the optical axis of the base. The optical axis of the laser emitted by the laser indicator 5 is perpendicular to the bottom surface of the laser indicator 5, and thus the laser optical axis is ensured to be parallel to the optical axis of the infrared imaging module 1.

In some embodiments, the infrared camera further includes a lighting lamp 6. The lighting lamp 6 is arranged at a bottom end of the handle 2, and is used to illuminate at least a field of view below the infrared camera when the infrared camera is held for normal use. It can be understood that the bottom end of the handle 2 includes both the bottom surface of the handle 2 and a bottom end of any side wall of the handle 2. By providing the lighting lamp 6 at the bottom end of handle 2, it can illuminate at least the field of view below the infrared camera when the user holds the handle 2 for normal shooting. This allows the infrared camera to provide ground illumination for the user in low light environments, such as for night use, especially for field shooting, making it easy for the user to observe the ground, thereby improving the user experience.

In some embodiments, the infrared imaging module 1 is arranged at the top end of the handle 2, and the infrared lens of the infrared imaging module 1 faces forward relative to the handle 2. The lighting lamp 6 is arranged at the bottom end of the handle 2, and the lighting lamp 6 can at least illuminate in a direction from the top to the bottom of the handle 2. Due to the fact that the infrared camera is usually used to shoot in a forward direction when being held for normal use, with the arrangement above, the lighting lamp 6 can illuminate the field of view below the camera when the user holds the camera to shoot in the forward direction.

In some embodiments, the bottom surface of the handle 2 is provided with a mounting hole 29, and the lighting lamp 6 is fixed in the mounting hole 29. In this embodiment, the lighting lamp 6 is mounted in a fixed manner, that is, the lighting lamp 6 is immovably fixed to the handle 2. Providing the mounting hole 29 on the bottom surface of the handle 2 not only facilitates mounting of the lighting lamp 6, but also makes the lighting lamp 6 illuminate downward, which meets the requirements of the ground illumination when the camera is in use. With the arrangement above, the structure is simple and easy to assemble.

In some embodiments, the lighting lamp 6 is rotatably arranged on the handle 2, and the handle 2 is provided with a securing member that is configured to cooperate with the lighting lamp 6 to secure the lighting lamp 6 at different angles relative to the axial direction of the infrared imaging module 1. The difference between this embodiment and the above embodiment lies in that, in this embodiment, the lighting lamp 6 is mounted in a rotatable manner. During use, according to different positions to be illuminated, the user can rotate the lighting lamp 6 to illuminate the target area. For example, when the user holds the handle 2 and operates the infrared imaging module 1 to shoot forward, the lighting lamp 6 can be rotated to illuminate downward to lighten the ground. Alternatively, by rotating the lighting lamp 6 to face forward, the lighting lamp 6 can be used for forward illumination. It can be understood that the rotation range of lighting lamp 6 may be determined as needed, which is not limited here. The fastener is configured to cooperate with the lighting lamp 6. After the user rotates the lighting lamp 6 to the required angle, the securing member can secure the lighting lamp 6 at that angle. Therefore, the lighting lamp 6 can be kept at the adjusted position without a further action on the lighting lamp 6 by the user, which further facilitates the operation.

In some embodiments, the securing member is a damping pad provided between the lighting lamp 6 and the handle 2. When the user rotates the lighting lamp 6, the user needs to overcome the damping force applied on the lighting lamp 6 by the damping pad. When the lighting lamp 6 is adjusted into place, the lighting lamp 6 is kept at the current angle by the damping force of the damping pad. The securing member is configured as the damping pad, which can achieve continuous adjustment of the rotation angle of the lighting lamp 6, thus achieving improved angle adjustment precision. In other embodiments, the securing member may be configured as multiple sets of engagement structures, which are cooperatively provided between the lighting lamp 6 and the handle 2.

In some embodiments, a mounting groove is provided on an edge of a side of the bottom end of the handle 2 facing the infrared lens of the infrared imaging module 1, and the lighting lamp 6 is rotatably mounted in the mounting groove. That is, the lighting lamp 6 is rotatably mounted on an edge of the handle 2, which facilitates the rotation of the lighting lamp 6 within a larger range. For example, the rotation range can be greater than 180 degrees, thereby meeting diverse lighting needs.

In some embodiments, the handle 2 is provided with at least two mounting holes 29. The lighting lamp 6 is detachably arranged in a corresponding one of the mounting holes 29. One of the at least two mounting holes 29 is provided on the bottom surface of the handle 2, and another one of the at least two mounting holes 29 is provided on a side surface of the handle 2 facing the infrared lens 122 of the infrared imaging module 1. The above embodiments illustrate that the lighting lamp 6 can illuminate in various angles via rotatable mounting. In this embodiment, the mounting holes 29 are provided at different positions on the handle 2, and the lighting lamp 6 is selectively connected to one of the different mounting holes 29 in a detachable manner. Therefore, the user can mount the lighting lamp 6 into the corresponding mounting hole 29 according to the lighting needs. For example, when illuminating forward, the lighting lamp 6 is mounted into the mounting hole 29 on the side surface of the handle 2 facing the infrared lens 122. When requiring ground illumination, the lighting lamp 6 is mounted into the mounting hole 29 on the bottom surface of the handle 2. According to the needs, a single lighting lamp 6 may be provided for the different mounting holes 29, and the user can choose to mount the lighting lamp 6 in different mounting holes 29. In other embodiments, at least two lighting lamps 6 are provided, that is, the lighting lamps 6 and the mounting holes 29 are provided in one-to-one correspondence. The user can choose to detachably mount each lighting lamp 6 in the respective mounting hole 29 or disassemble it from the mounting hole 29, which can also achieve the effect of selectively mounting the lighting lamps 6 according to lighting needs.

In some embodiments, dust covers are provided at the respective mounting holes 29, and each dust cover is detachably connected to the corresponding mounting hole 29 to block an opening of the mounting hole 29. For the mounting hole 29 in which the lighting lamp 6 is not mounted, the dust cover may be mounted to the mounting hole 29 to block its opening, which prevents liquid or dust from entering the mounting hole 29, thereby avoiding the resulted malfunction and improving the reliability of the infrared camera.

In some embodiments, an included angle between the axial direction of the infrared imaging module 1 and an axial direction of the lighting lamp 6 is greater than 90 degrees and less than 180 degrees. Since the infrared camera is widely used for outdoor operations at night, sometimes the shooting angle of the infrared camera needs to be inclined upward for shooting trees or other environmental objects. As such, since the included angle between the axial direction of the infrared imaging module 1 and the axial direction of the lighting lamp 6 is greater than 90 degrees and less than 180 degrees, when the user holds the handle 2 and shoots obliquely upward, the lighting lamp 6 can illuminate the field of view below the camera, that is, ground illumination can be achieved, which helps the user to observe the ground when shooting obliquely upward, thereby improving the user experience.

In some embodiments, the lighting lamp 6 includes an LED lamp or a laser lamp. The conventional LED lamp has low cost. Furthermore, it and has a different lighting principle from that of a laser lamp, and therefore is suitable for regions or environments with regulatory requirements for safety standards of laser products. The laser lamp has a small size and a long range. Under the same power, the laser lamp can provide better illumination performance.

In some embodiments, the infrared camera is provided with a lighting lamp 6 and/or a laser indicator 5. The handle 2 is provided with a lighting switch 61 electrically connected to the lighting lamp 6 and/or an indicator switch 51 electrically connected to the laser indicator 5. Specifically, the indicator switch 51 is arranged on the same side as the laser indicator 5. For example, both the indicator switch 51 and the laser indicator 5 are arranged on a front side wall of the handle 2, and thus the user can easily operate the indicator switch 51 with the index finger while holding the handle. The lighting switch 61 is arranged on a side wall of the handle 2 opposite to the infrared lens of the infrared imaging module 1. For example, the lighting switch 61 is arranged below the main switch 8, and thus the user can easily operate the lighting switch 61 with the thumb while holding the handle.

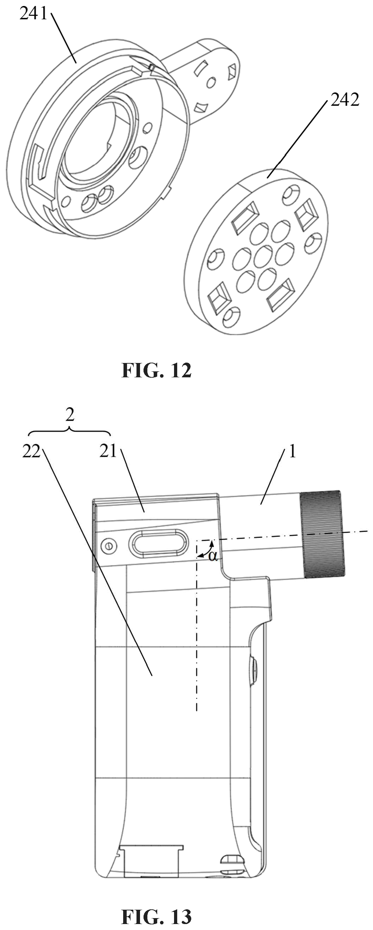

In some embodiments, referring to FIG. 13, the infrared imaging module 1 is arranged at the top end of the handle 2. An included angle between the axial direction of the infrared imaging module 1 and the handle 2, i.e., the angle α in the figure, ranges from 91 degrees to 150 degrees. Therefore, when the handle 2 is arranged vertically, an included angle between the infrared imaging module 1 and a horizontal plane ranges from 1 degree to 60 degrees. It can be understood that the included angle between the axial direction of the infrared imaging module 1 and the handle 2 refers to the included angle between the grip centerline of the handle 2 when held by the user and the axial direction of the infrared imaging module 1. When the handle 2 has a regular shape, the included angle refers to an angle between the axial direction of the infrared imaging module 1 and the centerline of the handle 2. Since the comfort is poor when the user holds similar devices vertically, a little tilt in the grip is required to improve the comfort level. Therefore, in this embodiment, the included angle between the infrared imaging module 1 and the handle 2 is set within the above range, and thus the user can tilt the handle 2 during grip while shooting forward with the infrared imaging module 1, which follows ergonomic design and improves the user experience. In addition, the infrared camera is widely used for outdoor operations at night, and there are cases that the shooting angle of the infrared camera needs to be inclined upward for shooting trees and other environmental objects. Therefore, an included angle between the axial direction of the infrared lens 122 of the infrared imaging module 1 and the handle 2 ranges from 91 degrees to 150 degrees, and thus the user can hold the handle 2 to shoot obliquely upward, which is easy to operate.

In some embodiments, the included angle between the axial direction of the infrared imaging module 1 and the handle 2 ranged from 93 degrees to 120 degrees. When the handle 2 is arranged vertically, the included angle between the infrared imaging module 1 and the horizontal plane ranges from 3 degrees to 30 degrees. With the arrangement above, it follows the grip habits of most people, offering a good gripping feel, thereby improving the user experience. Specifically, the included angle between the axial direction of the infrared imaging module 1 and the handle 2 may be 93 degrees, 95 degrees, 100 degrees, 105 degrees, 110 degrees, or 120 degrees. Accordingly, when the handle 2 is arranged vertically, the included angle between the infrared imaging module 1 and the horizontal plane is 3 degrees, 5 degrees, 10 degrees, 15 degrees, 20 degrees, or 30 degrees.

In some embodiments, when the handle 2 includes a mounting portion 21 and a gripping portion 22, a side wall of the gripping portion 22 is used for the user to grip. The included angle between the axial direction of the infrared imaging module 1 and an extension direction of the gripping portion 22 ranges from 91 degrees to 150 degrees. The specific arrangement of the mounting portion 21 and the gripping portion 22 may refer to the above embodiments, which will not be repeated here. The gripping portion 22 is for the user to grip. It has such an extension direction that provides a large space for the user to grip. Therefore, setting the included angle between the extension direction of the gripping portion 22 and the axial direction of the infrared imaging module 1 within the above range further enables the user to grip reliably.

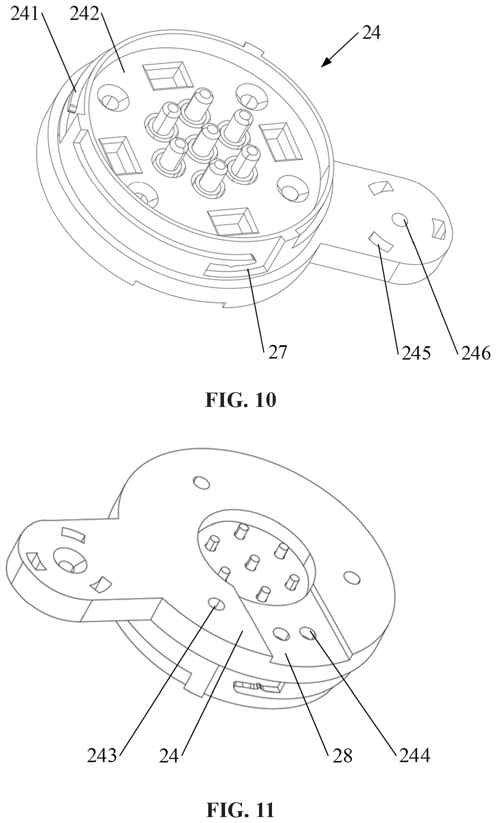

In some embodiments, referring to FIG. 10 to FIG. 12, the handle 2 includes a base 24, which is arranged on the mounting portion 21. The base 24 is detachably connected to the infrared imaging module 1. An included angle between an optical axis of the base 24 and the extension direction of the gripping portion 22 ranges from 91 degrees to 150 degrees. For the convenience of mounting the infrared imaging module 1, the handle 2 is provided with the base 24, that is, the handle 2 includes a housing 23 and a base 24 arranged on the housing 23. The optical axis of the base 24 is configured such that the included angle between the optical axis of the base 24 and the extension direction of the gripping portion 22 ranges from 91 degrees to 150 degrees. In this way, when the infrared imaging module 1 is mounted to the base 24, the included angle between the axial direction of the infrared imaging module 1 and the extension direction of the gripping portion 22 ranges from 91 degrees to 150 degrees accordingly. Therefore, the included angle between the infrared imaging module 1 and the gripping portion 22 is controlled through the cooperation of the base 24 and the gripping portion 22, which facilitates mounting of the infrared imaging module 1.

In some embodiments, the infrared imaging module 1 is detachably mounted at the front end of the handle 2. The infrared imaging module 1 is detachably connected to the handle 2, so that the infrared imaging module 1 can be disassembled as a whole from the handle 2. Furthermore, when the infrared imaging module 1 is connected to the handle 2, the infrared imaging module 1 is electrically connected to the display 3, so that image data information can be transmitted from the infrared imaging module 1 to the display 3. When the infrared imaging module 1 is disassembled from the handle 2, the infrared imaging module 1 is electrically disconnected from the display 3 accordingly. That is, in the present application, the infrared imaging module 1 is physically connected to the handle 2 in a detachable manner, and the infrared imaging module 1 is electrically connected to the display 3 in a detachable manner. Therefore, the user can easily replace the infrared imaging module 1 with other infrared imaging modules 1 of various specifications or models according to the shooting needs, and the replacement infrared imaging module 1 is electrically connected to the display 3, so that the image captured by the infrared imaging module 1 can be transmitted to the display 3 for displaying, which facilitates observation by the user. In addition, when the infrared imaging module 1 malfunctions and requires repair or upgrade, the infrared imaging module 1 can also be easily disassembled and replaced.

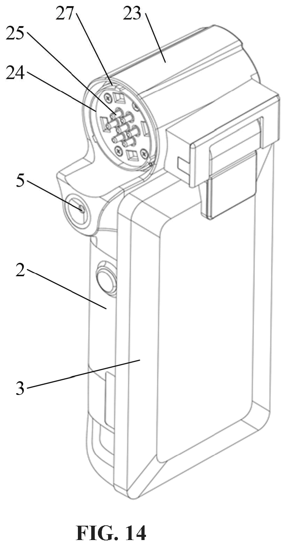

In some embodiments, referring to FIG. 10 to FIG. 12 and FIG. 14, the infrared imaging module 1 is connected to the handle 2 by engagement. The engagement connection is convenient for disassembly and assembly without the need for tools. It can be manually disassembled and assembled, and the connection is reliable. Specifically, one of the infrared imaging module 1 and the handle 2 is provided with an engagement groove 27, and the other is provided with an engagement block 115, which can be engaged with the engagement groove 27. The infrared imaging module 1 is detachably connected to the handle 2 through the engagement of the engagement groove 27 and the engagement block 115. The shape of the engagement groove 27 matches that of the engagement block 115, so that the engagement groove 27 and the engagement block 115 can be reliably engaged with each other. It can be understood that at least a part of the engagement block 115 and/or at least a part of the engagement groove 27 is flexible, so that the engagement block 115 can be inserted into the engagement groove 27 or released from the engagement groove 27 through the deformation of the engagement block 115 or the deformation of the engagement groove 27 under an external force. After the engagement block 115 is inserted to an engagement position in the engagement groove 27, the deformation of the engagement block 115 and/or the engagement groove 27 automatically recovers, thereby achieving an effective engagement between the engagement block 115 and the engagement groove 27.

In some embodiments, the engagement groove 27 is arranged in a circumferential direction of the infrared imaging module 1 or the handle 2. A first end of the engagement groove 27 extends to an edge of the infrared imaging module 1 or an edge of the handle 2. The engagement block 115 is configured to be inserted into the engagement groove 27 from the first end and rotate along the engagement groove 27 to a second end of the engagement groove 27 for engagement. After the engagement block 115 is inserted into the engagement groove 27, the infrared imaging module 1 or the handle 2 is rotated, that is, the infrared imaging module 1 and the handle 2 rotate relative to each other, and the engagement block 115 rotates along the engagement groove 27 accordingly. During the rotation, the engagement groove 27 performs position-limiting and guiding functions on the engagement block 115. When rotating to the second end, the engagement block 115 is engaged with the engagement groove 27. Therefore, compared with a direct axial insertion engagement, the above rotational engagement has a lower requirement for positional precision when inserting the engagement block 115. Therefore, the operation is easy.

In some embodiments, connecting portions of the handle 2 and the infrared imaging module 1 are respectively provided with threads that are configured to engage with each other. The infrared imaging module 1 is detachably connected to the handle 2 through threaded connection. The threaded connection facilitates disassembly and assembly and eliminates the need for tools. It can be manually disassembled and assembled. Furthermore, the connection is reliable, and the assembly precision is high.

In some embodiments, referring to FIG. 6, FIG. 7, and FIG. 13, the infrared imaging module 1 is provided with a first electrical connector 13, and the handle 2 is provided with a second electrical connector 25. The second electrical connector 25 is electrically connected to the display 3. When the infrared imaging module 1 is mounted to the handle 2, the first electrical connector 13 is in contact with and thus in electrical conduction with the second electrical connector 25, thereby achieving the electrical connection between the infrared imaging module 1 and the display 3. With the first electrical connector 13 of the infrared imaging module 1 and the second electrical connector 25 of the handle 2 that is electrically connected to the display 3, the first electrical connector 13 is in electrical contact with the second electrical connector 25. Therefore, when the infrared imaging module 1 is disassembled from the handle 2, the first electrical connector 13 and the second electrical connector 25 are no longer in contact and thus are electrically disconnected. The first electrical connector 13 and the second electrical connector 25 may be in the form of, for example, conductive contacts, conductive spring pins, conductive sheets, etc., which are not specifically limited here. The first electrical connector 13 and the second electrical connector 25 may have the same or different forms, as long as the contact and electrical conduction therebetween can be achieved.

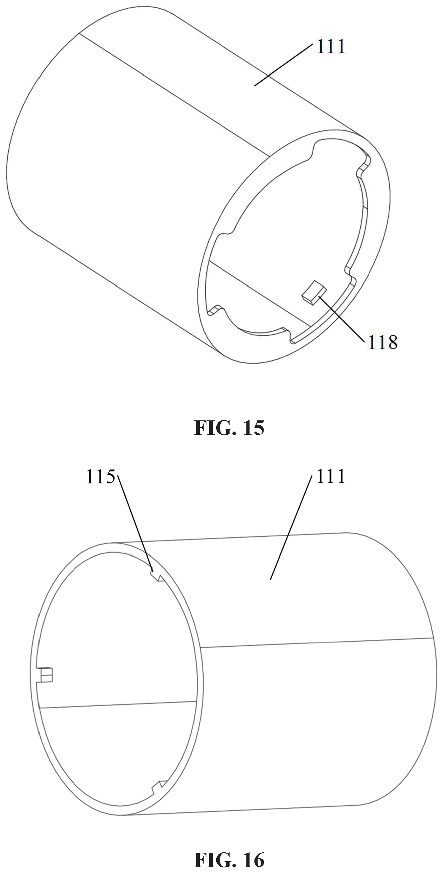

In some embodiments, referring to FIG. 6, FIG. 7, FIG. 15, and FIG. 16, the infrared imaging module 1 includes an imaging core 12 and a first mounting member 111. The imaging core 12 is used for image detection and is electrically connected to the first electrical connector 13. The first mounting member 111 is used to mount the imaging core 12 and the first electrical connector 13. The first mounting member 111 is rotatable relative to the first electrical connector 13 and the handle 2. After the infrared imaging module 1 is located close to the handle 2 and the first electrical connector 13 is in electrical contact with the second electrical connector 25, the first electrical connector 13 and the handle 2 remain fixed relative to each other, and the first mounting member 111 can be rotated relative to the first electrical connector 13 and the handle 2 to fix the infrared imaging module 1 to the handle 2. With the first mounting member 111, it is convenient to mount the imaging core 12 to the handle 2, and there is no need for a connecting structure on the imaging core 12 to cooperate with the handle 2. When mounting the first mounting member 111 to the handle 2, the first mounting member 111 is axially moved close to the handle 2, so that the first electrical connector 13 is in electrical contact with the second electrical connector 25. After that, Since the imaging core 12 and the first electrical connector 13 are rotatably arranged on the first mounting member 111, the first mounting member 111 is rotated to connect to the handle 2 while the imaging core 12 and the first electrical connector 13 do not rotate along with the first mounting member 111; or, the handle 2 is rotated, and the imaging core 12 and the first electrical connector 13 are rotated synchronously with the handle 2, while the first mounting member 111 does not rotate along with the handle 2. With the arrangement above, it is convenient to connect the first mounting member 111 to the handle 2, and the rotation operation does not affect the contact between the first electrical connector 13 and the second electrical connector 25. Therefore, the first electrical connector 13 and the second electrical connector 25 may both have a small size while achieving reliable electrical connection therebetween.

Specifically, when the first mounting member 111 is connected to the handle 2 through rotational engagement as described in the above embodiment, during mounting, the infrared imaging module 1 is located close to the handle 2, and the engagement block 115 is inserted into the engagement groove 27 from the first end of the engagement groove 27. Meanwhile, the first electrical connector 13 is in contact with and thus in electrical conduction with the second first electrical connector 25. After that, the first mounting member 111 is rotated, so that the engagement block 115 is rotated to the second end along the engagement groove 27 and engaged with the engagement groove 27, thereby achieving the connection between the infrared imaging module 1 and the handle 2. In this process, the first electrical connector 13 remains stationary relative to the handle 2, thereby achieving reliable electrical contact between the first electrical connector 13 and the second electrical connector 25. The disassembly can be performed simply by a reverse operation, which will not be repeated here.

In some embodiments, referring to FIG. 6 and FIG. 7, the infrared imaging module 1 further includes a second mounting member 112. The second mounting member 112 is rotatably arranged on the first mounting member 111. The imaging core 12 is arranged on the second mounting member 112. That is, the imaging core 12 is rotatably connected to the first mounting member 111 through the second mounting member 112. The second mounting member 112 facilitates mounting of the imaging core 12 without the need for a rotating structure on the imaging core 12 for cooperation.

In some embodiments, referring to FIG. 6, FIG. 7, and FIG. 19, the infrared imaging module 1 further includes a first connecting disc 113, which is fixed to the second mounting member 112. The first electrical connecting member 13 is arranged on the first connecting disc 113. That is, the first connecting disc 113 is provided for mounting of the first electrical connector 13. When multiple first electrical connectors 13 are provided, the first connecting disc 113 facilitates integral mounting of the first electrical connectors 13. Specifically, the first connecting disc 113 is provided with a contact hole 1131, and the first electrical connector 13 is configured as a contact located in the contact hole 1131. One end of the contact is configured to be in contact with the second electrical connector 25 of the handle 2 to transmit information and supply power, and the other end of the contact is connected to a connecting port 124 of the imaging core 12 through a ribbon cable.

In some embodiments, referring to FIG. 10 to FIG. 12, the handle 2 is provided with a base 24. The base 24 includes a base body 241 and a second connecting disc 242. The second connecting disc 242 is arranged on the base body 241, and the second electrical connector 25 is arranged on the second connecting disc 242. The base 24 not only facilitates mounting of the infrared imaging module 1, but also facilitates arrangement of the second electrical connector 25. In a case that multiple second electrical connectors 25 are provided, the multiple second electrical connectors 25 can be integrally mounted to the second connecting disc 242.

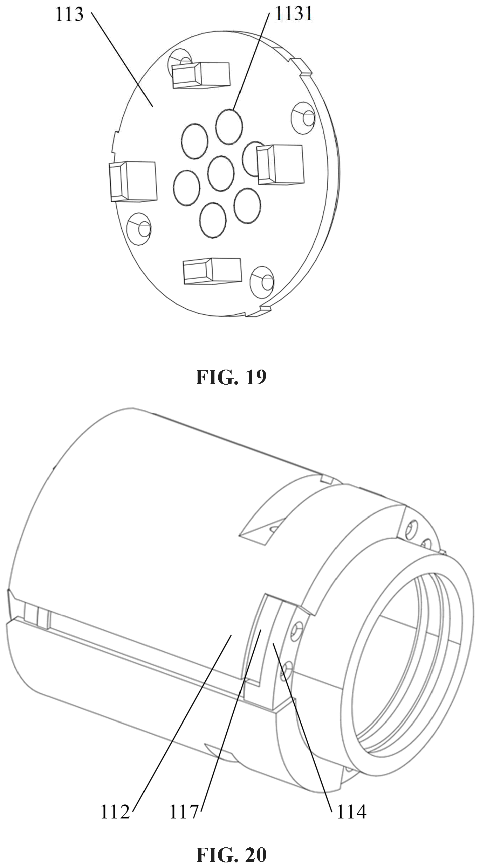

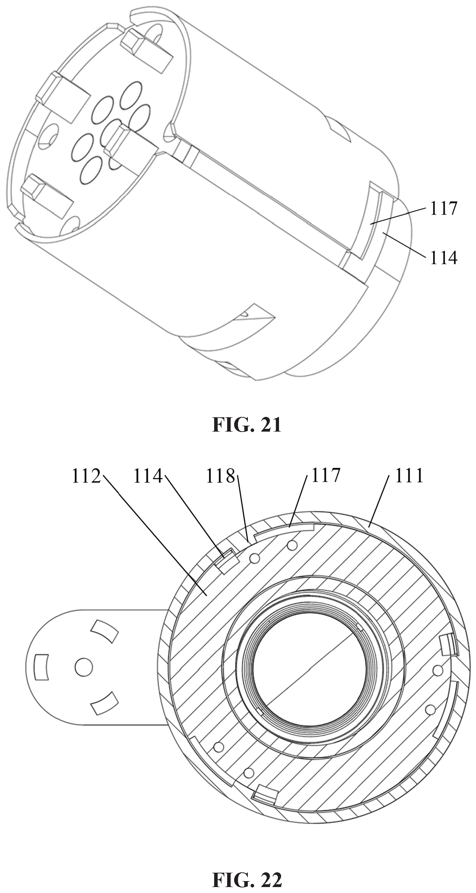

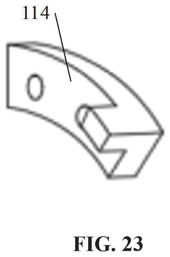

In some embodiments, referring to FIG. 20 to FIG. 23, the first mounting member 111 and the second mounting member 112 are both cylindrical. One of the first mounting member 111 and the second mounting member 112 inserted in the other of the first mounting member 111 and the second mounting member 112. Specifically, the first mounting member 111 is sleeved over the second mounting member 112. As such, the first mounting member 111 can further provide external protection while achieving the rotatable connection. Moreover, the overall shape of the infrared imaging module 1 is more regular.

Further, referring to FIG. 20 to FIG. 23 and FIG. 15, one of the first mounting member 111 and the second mounting member 112 is provided with a limiting groove 117 arranged in the circumferential direction, and the other is provided with a limiting protrusion 118. The limiting protrusion 118 can be inserted into the limiting groove 117 for axial position limiting and can rotate along the limiting groove 117. By the cooperation of the limiting groove 117 and the limiting protrusion 118, the first mounting member 111 and the second mounting member 112 can be rotatably connected to each other. That is, the first mounting member 111 and the second mounting member 112 cannot be separated in the axial direction, but can rotate relative to each other in the circumferential direction. Specifically, a length of the limiting groove 117 may be determined according to an angle that the first mounting member 111 is rotated relative to the handle 2 for connection.

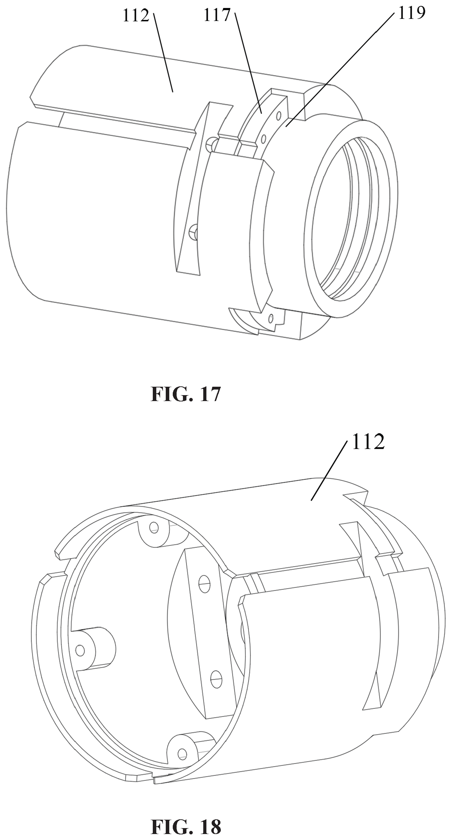

In some embodiments, referring to FIG. 20 to FIG. 23 and FIG. 15 to FIG. 18, a first end of the limiting groove 117 extends to an edge of the first mounting member 111 or an edge of the second mounting member 112. The limiting protrusion 118 can be inserted into the limiting groove 117 from the first end of the limiting groove 117 to rotate along the limiting groove 117. The infrared imaging module 1 further includes a cover plate 114, which is detachably connected to one of the first mounting member 111 and the second mounting member 112 that is provided with the limiting groove 117. The cover plate 114 is at least partially located in the first end of the limiting groove 117 to limit the limiting protrusion 118 within the limiting groove 117.

For ease of explanation, an example is taken in which the limiting groove 117 is provided on the second mounting member 112. The first end of the limiting groove 117 extends to the edge of the second mounting member 112, that is, the first end of the limiting groove 117 is open, which facilitates insertion of the limiting protrusion 118 into the limiting groove 117. Furthermore, the overall structure is simple and reliable. During disassembling, the cover plate 114 is first removed from the second mounting member 112, and the limiting protrusion 118 can be axially released from the first end of the limiting groove 117, thereby releasing the connection between the first mounting member 111 and the second mounting member 112. Therefore, with the arrangement above, the rotatable connection can be achieved, and the disassembly and assembly are easy. The imaging core 12 can be easily disassembled or replaced according to different shooting needs of the user or maintenance or upgrade needs of the imaging core 12. It can be understood that, in a case that the limiting groove 117 is provided on the first mounting member 111, the disassembly and assembly methods are the same as those described in the above embodiments, which will not be repeated here.

In some embodiments, a cover plate mounting groove 119 is provided on an end face of the first mounting member 111 or the second mounting member 112 that is provided with the limiting groove 117. The cover plate mounting groove 119 is in communication with the limiting groove 117 and has a depth greater than that of the limiting groove 117.

With the arrangement above, the first mounting member 111 and the second mounting member 112 are rotatably connected, and it is convenient to disassemble and assemble. Moreover, the limiting protrusion 118 is first assembled into the limiting groove 117, and when the cover plate 114 is not yet mounted, the user can clearly observe the position of the limiting protrusion 118 in the limiting groove 117. After the limiting protrusion 118 is rotated into place, the cover plate 114 is mounted, which further facilitates the disassembly and assembly.

It can be understood that, in the case that the limiting groove 117 is provided on the first mounting member 111, the disassembly and assembly methods are the same as those described in the above embodiments, which will not be repeated here.

In other embodiments, the limiting protrusion 118 may be elastically extendable and retractable. During mounting, the limiting protrusion 118 is retracted and moved to face the limiting groove 117, so that the limiting protrusion 118 can extend outward into the limiting groove 117 under the action of the elastic force.

The above embodiments mainly illustrate the detachable connection between the infrared imaging module 1 and the handle 2. In some embodiments, the infrared imaging module 1 includes a mounting assembly 11 and an imaging core 12. The mounting assembly 11 is used for detachably mounting the imaging core 12 and detachably connecting the infrared imaging module 1 to the handle 2. A first electrical connector 13 is provided on the mounting assembly 11. When the imaging core 12 is mounted to the mounting assembly 11, the first electrical connector 13 is electrically connected to the imaging core 12. When the infrared imaging module 1 is connected to the handle 2, the first electrical connector 13 is electrically connected to the handle 2. The mounting assembly 11 is detachably connected to the imaging core 12, and thus the imaging core 12 can be disassembled for maintenance or upgrade as needed, or can be replaced by other imaging cores 12 having different specifications or models. In addition, the mounting assembly 11 is provided with a first electrical connector 13. When the imaging core 12 is mounted to the mounting assembly 11, the imaging core 12 is electrically connected to the first electrical connector 13. Therefore, when the infrared imaging module 1 is connected to the handle 2, the first electrical connector 13 is electrically connected to the handle 2, so that the imaging core 12 is electrically connected to the handle 2. By providing the first electrical connector 13, it is easy to achieve an electrical connection between the imaging core 12 and the handle 2 when the imaging core 12 is mounted to the mounting assembly 11. With the arrangement above, it is convenient to disassemble and assemble the imaging core 12, so that the imaging core 12 can be replaced by other imaging cores 12 having different specifications or models to meet different shooting needs, or the imaging core 12 can be easily disassembled and assembled to meet the maintenance or upgrade requirements of the imaging core 12.

Specifically, the mounting assembly 11 includes the first mounting member 111 and the second mounting member 112 as described above. The first mounting member 111 is detachably connected to the handle 2. The imaging core 12 is detachably mounted to the second mounting member 112.

In some embodiments, the imaging core 12 is provided with a connecting port 124, and the connecting port 124 is connected to the first electrical connector 13 through a cable. The connection through cable facilitates the cable arrangement inside the second mounting member 112. The position and layout of the cable can be easily adjusted based on an internal space of the second mounting member 112. Specifically, the connecting port 124 is provided with wiring terminals. One end of the first electrical connector 13 is connected to the wiring terminals through a ribbon cable. The other end of the first electrical connector 13 is electrically connected to the display 3 to transmit signals and supply power to the imaging core 12.

The various embodiments in this specification are described in a progressive manner, with each embodiment focusing on its differences from other embodiments. The same and similar parts among the various embodiments can be referred to each other.

The above description of the disclosed embodiments enables those skilled in the art to implement or use the present application. Various modifications to these embodiments will be apparent to those skilled in the art. The general principles defined herein can be implemented in other embodiments without departing from the spirit or scope of the present application. Therefore, the present application will not be limited to the embodiments shown herein, but should be defined by the widest scope consistent with the principles and novel features disclosed herein.

## Claims

1. An infrared camera, comprising:
a handle (2) configured for a user to grip;
an infrared imaging module (1) arranged on the handle (2) and configured to capture an infrared image; and
a display (3) movably arranged on the handle (2), wherein
the display (3) is electrically connected to the infrared imaging module (1) and is configured to receive and display the infrared image captured by the infrared imaging module (1); and
the display (3) is movable between an unfolded state and a folded state, wherein
in the folded state, a screen of the display (3) is flush against the handle (2); and
in the unfolded state, the screen of the display (3) is disengaged from the handle (2) and is configured to rotate to face a user for observation.

2. The infrared camera according to claim 1, wherein
the display (3) is connected to a side of the handle (2) and is rotatable relative to the handle (2) about a first direction and a second direction; and
when the display (3) is rotated relative to the handle (2) about the first direction to be in the unfolded state, the display (3) is configured to further rotate about the second direction to orient the screen towards the user.

3. The infrared camera according to claim 1, wherein
the handle (2) comprises a mounting portion (21) and a gripping portion (22), the mounting portion (21) is arranged at a top end of the gripping portion (22), the infrared imaging module (1) is arranged at a front end of the mounting portion (21), the display (3) is arranged on a side of the mounting portion (21), and the gripping portion (22) is configured for the user to grip.

4. The infrared camera according to claim 1, wherein
the infrared imaging module (1) is detachably mounted at a front end of the handle (2).

5. The infrared camera according to claim 4, wherein
one of the infrared imaging module (1) and the handle (2) is provided with an engagement groove (27), the other of the infrared imaging module (1) and the handle (2) is provided with an engagement block (115) that is configured to engage with the engagement groove (27), and the infrared imaging module (1) is detachably connected to the handle (2) through engagement between the engagement groove (27) and the engagement block (115); or
connecting portions of the handle (2) and the infrared imaging module (1) are respectively provided with threads that are configured to be engaged with each other, and the infrared imaging module (1) is detachably connected to the handle (2) through threaded connection.

6. The infrared camera according to claim 1, wherein the infrared imaging module (1) comprises:
an imaging core (12) configured for image detection; and
a mounting assembly (11) configured to mount the imaging core (12) and mount the infrared imaging module (1) to the handle (2).

7. The infrared camera according to any one of claims 1 to 6, wherein
a bottom surface of the handle (2) is provided with a standard threaded hole (4).

8. The infrared camera according to any one of claims 1 to 6, further comprising a laser indicator (5), wherein
the laser indicator (5) is arranged on the handle (2), a laser emission direction of the laser indicator (5) is the same as an orientation of a lens of the infrared imaging module (1), and an optical axis of the laser indicator (5) is parallel to an optical axis of the infrared imaging module (1).

9. The infrared camera according to claim 8, wherein
the handle (2) comprises a housing (23) and a base (24) arranged on the housing (23); and
the base (24) is provided with a first mounting part and a second mounting part, the infrared imaging module (1) is arranged at the first mounting part, and the laser indicator (5) is arranged at the second mounting part.

10. The infrared camera according to claim 9, wherein
a mounting plane of the first mounting part is parallel to or coplanar with a mounting plane of the second mounting part, and the mounting plane of the first mounting part is perpendicular to the optical axis of the infrared imaging module (1) and the optical axis of the laser indicator (5).

11. The infrared camera according to any one of claims 1 to 6, further comprising a lighting lamp (6), wherein
the lighting lamp (6) is arranged at a bottom end of the handle (2) and is configured to illuminate at least a field of view below the infrared camera.

12. The infrared camera according to claim 11, wherein
a bottom surface of the handle (2) is provided with a mounting hole (29), and the lighting lamp (6) is fixed in the mounting hole (29).

13. The infrared camera according to claim 11, wherein
the lighting lamp (6) is rotatably arranged on the handle (2), and the handle (2) is provided with a securing member that is configured to cooperate with the lighting lamp (6) to secure the lighting lamp (6) at different angles relative to an axial direction of the infrared imaging module (1).

14. The infrared camera according to claim 13, wherein
the securing member is a damping pad arranged between the lighting lamp (6) and the handle (2).

15. The infrared camera according to claim 13, wherein
a mounting groove is provided on an edge of a side of the bottom end of the handle (2) facing a lens of the infrared imaging module (1), and the lighting lamp (6) is rotatably arranged in the mounting groove.

16. The infrared camera according to claim 11, wherein
the number of the lighting lamp (6) is at least two, the handle (2) is provided with at least two mounting holes (29) in correspondence to the lighting lamps (6), and the lighting lamps (6) are detachably arranged in the respective mounting holes (29); and
one of the at least two mounting holes (29) is provided on a bottom surface of the handle (2), and another one of the at least two mounting holes (29) is provided on a side surface of the handle (2) facing a lens of the infrared imaging module (1).

17. The infrared camera according to claim 16, wherein
dust covers are provided at the respective mounting holes (29), and each of the dust covers is configured to detachably connect to the respective mounting hole (29) to block an opening of the mounting hole (29).

18. The infrared camera according to any one of claim 11, wherein
an included angle between an axial direction of the infrared imaging module (1) and an axial direction of the lighting lamp (6) is greater than 90 degrees and less than 180 degrees.

19. The infrared camera according to any one of claims 1 to 6, wherein
the handle (2) is provided with a mounting seat (7), which is configured to detachably connect to an external accessory.

20. The infrared camera according to claim 19, wherein
the mounting seat (7) is arranged on a side wall of a top end of the handle (2).

21. The infrared camera according to claim 19, wherein
the mounting seat (7) comprises a mounting seat body (71) and a mounting seat protrusion (72) arranged on the mounting seat body (71); and
the mounting seat protrusion (72) is provided with a fixing portion (73) configured to connect to the external accessory, an opening is formed on the handle (2), and the mounting seat protrusion (72) is arranged at the opening of the handle (2).

22. The infrared camera according to claim 19, wherein
the mounting seat (7) is configured to connec to the external accessory through a standard mounting component, the mounting seat (7) is detachably connected to the standard mounting component, and the standard mounting component is configured to connect to different external accessories.

23. The infrared camera according to any one of claim 19, wherein
the handle (2) is provided with a mounting positioning portion (28), and the mounting seat (7) is provided with a positioning structure (74) that is configured to cooperate with the mounting positioning portion (28) to make an axial direction of the external accessory connected to the mounting seat (7) parallel to an optical axis of the infrared imaging module (1).

24. The infrared camera according to claim 23, wherein
the mounting positioning portion (28) comprises a guide groove, and a bottom surface of the guide groove is perpendicular to an axial direction of the infrared imaging module (1).

25. The infrared camera according to claim 24, wherein
the positioning structure (74) comprises an end face of the mounting seat (7) in contact with the bottom surface of the guide groove.

26. The infrared camera according to claim 19, wherein
the handle (2) is provided with a base (24), and the infrared imaging module (1) and the mounting seat (7) are both arranged on the base (24).

27. The infrared camera according to any one of claim 19, further comprising a cap (75) detachably connected to the mounting seat (7).

28. The infrared camera according to claim 1, wherein
the infrared imaging module (1) is arranged at a top end of the handle (2), and an included angle between an axial direction of the infrared imaging module (1) and the handle (2) ranges from 91 degrees to 150 degrees.

29. The infrared camera according to claim 28, wherein
the included angle between the axial direction of the infrared imaging module (1) and the handle (2) ranged from 93 degrees to 120 degrees.

30. The infrared camera according to claim 28, wherein
the handle (2) comprises a mounting portion (21) and a gripping portion (22), the mounting portion (21) is arranged at a top end of the gripping portion (22), the infrared imaging module (1) is arranged at the mounting portion (21), and a side wall of the gripping portion (22) is configured for the user to grip; and
an included angle between the axial direction of the infrared imaging module (1) and an extension direction of the gripping portion (22) ranges from 91 degrees to 150 degrees.

31. The infrared camera according to claim 30, wherein
the handle (2) further comprises a base (24) arranged on the mounting portion (21); and
the base (24) is detachably connected to the infrared imaging module (1), and an included angle between an optical axis of the base (24) and the extension direction of the gripping portion (22) ranges from 91 degrees to 150 degrees.

32. The infrared camera according to any one of claims 1 to 6, wherein
a main switch (8) is provided on a side wall of the handle (2) that faces opposite to a lens of the infrared imaging module (1), and the main switch (8) is configured to control on/off of the infrared camera.
